# EUROPÄISCHE PATENTSCHRIFT

(11) **EP 2 848 513 B1**
(45) Veröffentlichungstag und Bekanntmachung des Hinweises auf die Patenterteilung: **13.11.2019**
(21) Anmeldenummer: 14169832.4
(22) Anmeldetag: 10.04.2012
(51) Int. Cl.: B62L 1/16, B62L 1/00, B62L 3/02

(54) **Bremse und Verfahren zu ihrer Montage**
Brake and method for installing same
Frein et son procédé de montage

(30) Priorität: 19.04.2011 DE 102011007652
(43) Veröffentlichungstag der Anmeldung: 18.03.2015
(62) Teilanmeldung aus: 12715063.9
(73) Patentinhaber: Gustav Magenwirth GmbH & Co. KG, 72574 Bad Urach (DE)
(72) Erfinder: Hujer, Joachim, 72582 Grabenstetten (DE); Ruckh, Stefan, 72587 Römerstein (DE)
(74) Vertreter: Friese Goeden Patentanwälte PartGmbB

(56) Entgegenhaltungen:
- EP-A1- 0 023 414
- EP-A1- 0 575 720
- WO-A2-2007/079923
- DE-A1- 19 929 678
- FR-A1- 2 621 003
- US-A1- 2003 010 580

## Beschreibung

Die Erfindung betrifft eine hydraulische Fahrzeugbremse mit einem Geber und einem Nehmer, welche mit einer Hydraulikleitung verbunden sind, wobei die Hydraulikleitung mit einem Hydraulikfluid gefüllt ist. Darüber hinaus betrifft die Erfindung ein Verfahren zur Montage einer hydraulischen Bremse mit einem Geber und einem Nehmer, welche mit einer Hydraulikleitung verbunden sind, enthaltend die folgenden Schritte: Auftrennen der Hydraulikleitung, Montage des Gebers am Fahrzeug, Montage des Nehmers am Fahrzeug, Verlegen der Hydraulikleitung am Fahrzeug, Verbinden von Geber und/oder Nehmer mit der Hydraulikleitung

Aus der US 2003/0010580 A1 ist eine Scheibenbremse für ein Fahrrad bekannt, welche eine Bremszange aufweist. Die Bremszange enthält zumindest einen Kolben, welcher in der Bremszange aufgenommen ist und ein Paar von Reibbelägen gegen die Bremsscheibe führt.

Aus der DE 42 20 854 A1 ist eine Felgenbremse der eingangs genannten Art bekannt. Bei dieser bekannten Bremse ist der Hydraulikzylinder im Wesentlichen horizontal angeordnet, so dass dieser mit einem Ende am rechten Arm und dem anderen Ende am linken Arm befestigt ist. Hierdurch weist diese bekannte Bremse einen großen Bauraum und eine schlechte Aerodynamik mit vielen Luftverwirbelungen auf. Die Aufgabe der vorliegenden Erfindung besteht somit darin, eine Felgenbremse bereitzustellen, welche einen kleineren Bauraum und eine verbesserte Aerodynamik aufweist.

Weiterhin weist die bekannte Felgenbremse den Nachteil auf, dass bei der Montage am Fahrzeug bei einigen Einbausituationen die Bremsleitung vom Geber und/oder Nehmer demontiert werden muss und Bremsflüssigkeit aus dem dann freien Ende der Hydraulikleitung austreten kann. In diesem Fall wird eine aufwändige Entlüftung erforderlich.

Die Aufgabe wird erfindungsgemäß durch eine hydraulische Bremse gemäß Anspruch 1 und ein Fahrrad gemäß Anspruch 7 gelöst. Weiterhin besteht die Lösung der Aufgabe in einem Verfahren gemäß Anspruch 8. Vorteilhafte Weiterbildungen der Erfindung finden sich in den Unteransprüchen.

Als Beispiel, welches das Verständnis der Erfindung erleichtert, wird eine Felgenbremse mit einem rechten Arm und einem linken Arm beschrieben, welche beiderseits des Laufrades angeordnet sind. Jeder Arm weist ein Schwenklager auf, mit welchem dieser drehbar an einem feststehenden Teil des mit der Felgenbremse ausgestatteten Fahrzeuges gelagert ist. Der rechte und der linke Arm sind bei normalem Betrieb des Fahrzeuges in etwa vertikal angeordnet, so dass jeder Arm durch das Schwenklager in einen oberen Längsabschnitt und einen unteren Längsabschnitt unterteilt wird.

Die Bezeichnung "rechter Arm" und "linker Arm" dient im Sinne der vorliegenden Beschreibung nur zur Unterscheidung gleichartiger Merkmale. Die tatsächliche Anordnung am Fahrzeug kann sich ändern, je nachdem ob die Felgenbremse auflaufend oder ablaufend, am Vorderrad oder am Hinterrad am Fahrzeug angebaut wird.

Jeder der Arme kann einstückig gefertigt sein, beispielsweise als Schmiedeteil oder als faserverstärktes Kunststoffteil. In anderen Ausführungsformen der Erfindung kann ein Arm mehrteilig ausgeführt sein und zumindest eine Fügestelle aufwiesen, beispielsweise am Schwenklager oder an zumindest einem seiner Enden. Die Fügestelle kann durch Löten, Schweißen oder Kleben ausgeführt sein.

Der zur Bewegung der Arme erforderliche Hydraulikzylinder wird zwischen dem rechten Arm und dem linken Arm angeordnet. Dies bedeutet, dass der Hydraulikzylinder, der rechte Arm und der linke Arm in etwa parallel zueinander stehend und der Hydraulikzylinder in etwa in der durch das Laufrad des Fahrzeuges aufgespannten Ebene angeordnet ist.

Zwischen dem Hydraulikzylinder und zumindest einem Teilabschnitt des oberen Längsabschnittes des rechten und/oder linken Armes ist ein Keilelement vorgesehen, über welches der Hydraulikzylinder und zumindest ein Arm der Felgenbremse miteinander in Eingriff stehen. Der Hydraulikzylinder ist dazu eingerichtet, das Keilelement entlang seiner Bewegungsrichtung auf- bzw. abwärts zu bewegen. Je nach Stellung des Keilelementes verändert sich der Abstand der oberen Längsabschnitte der Arme zueinander. Dies führt über das Schwenklager zu einer Verringerung bzw. Vergrößerung des Abstandes der unteren Längsabschnitte der Arme. Sofern die unteren Längsabschnitte der Arme jeweils einen Bremsbelag tragen, werden diese zur Erzeugung einer Bremskraft mit vorgebbarer Kraft gegen den rotierenden Reibpartner bewegt, in der Regel die Felgenflanke. In einigen Ausführungsformen sind die Schwenklager am Fahrradrahmen befestigt, beispielsweise als Anlötteil. Dies ermöglicht den Einsatz der vorgeschlagenen Felgenbremse als Austauschteil einer an sich bekannten, mechanischen U-Brake oder V-Brake.

In einigen Ausführungsformen steht der obere Längsabschnitt des rechten bzw. linken Armes mit dem Keilelement in einer gleitenden Verbindung, so dass der Abstand der oberen Längsabschnitte durch Ab- bzw. Aufgleiten auf dem Keilelement vergrößert bzw. verringert werden kann. Zur Verringerung der Reibung und/oder des Verschleißes kann das Keilelement und/oder der mit dem Keilelement in Kontakt stehende Teilabschnitt des oberen Längsabschnittes der Arme mit einer Beschichtung bzw. einem Gleitelement versehen sein. Eine Beschichtung kann eine Hartverchromung oder eine Schicht aus diamantartigem Kohlenstoff enthalten. Ein Gleitelement kann aus einem duktilen Metall oder einer Legierung bestehen, beispielsweise Messing oder Bronze, oder aus einem Polymer, beispielsweise Polyoxymethylen oder Polytetrafluorethylen. In einigen Ausführungsformen der Erfindung kann das Keilelement mit einem Schmierstoff versehen sein, beispielsweise einem Fett, einem Ö1 oder Silikon.

In einigen Ausführungsformen können die oberen Längsabschnitte der Arme jeweils zumindest eine Rolle tragen, welche bei Bewegung des Keilelementes auf einer Flanke des Keilelementes abrollbar sind. Auf diese Weise wird die Reibung zwischen dem Keilelement und den Armen minimiert, so dass eine große Bremskraft mit einer geringen Betätigungskraft erreichbar ist. Weiterhin kann in dieser Ausführungsform der Verschleiß des Keilelementes und/oder des oberen Längsabschnittes der Arme reduziert sein, so dass die Lebensdauer der Felgenbremse vergrößert wird.

In einigen Ausführungsformen kann die Rolle mit einem Gleitlager versehen sein, beispielsweise einer Gleitbuchse, welche ein duktiles Metall oder eine Legierung oder ein Polymer enthält. Die Gleitbuchse kann in einigen Ausführungsformen der Erfindung Messing, Bronze, Polytetrafluorethylen oder Polyoxymethylen enthalten. In anderen Ausführungsformen der Erfindung kann die zumindest eine Rolle mit einem Wälzlager versehen sein, beispielsweise einem Rollenlager oder einem Kugellager. Hierdurch wird die Reibung weiter reduziert, so dass eine vergrößerte Bremsleistung möglich ist.

In einigen Ausführungsformen kann das Keilelement zumindest eine erste Flanke und zumindest eine zweite Flanke aufweisen, welche in unterschiedlichen Ebenen verlaufen, wobei der rechte Arm mit der ersten Flanke und der linke Arm mit der zweiten Flanke in Eingriff steht. Diese Ausführungsform erlaubt eine symmetrische Kraftübertragung auf die Arme, so dass das Auftreten von Momenten auf das Schwenklager vermieden wird.

In einigen Ausführungsformen kann zumindest eine Flanke des Keilelementes eine zumindest abschnittsweise konkave und/oder zumindest abschnittsweise konvexe und/oder zumindest abschnittsweise gerade Kontur aufweisen. Hierdurch kann die Charakteristik der Bremse, d.h. die erzeugte Bremskraft in Abhängigkeit der vom Fahrer auf dem Bremshebel aufgebrachten Betätigungskraft, auf unterschiedliche Streckenprofile, unterschiedliche Anwendungsbereiche oder unterschiedliche Vorlieben des Fahrers angepasst werden. In einigen Ausführungsformen der Erfindung können verschiedene Keilelemente als Set bzw. Satz angeboten werden, so dass der Benutzer der Felgenbremse diese nach seinen Vorlieben auswählen und austauschen kann.

In einigen Ausführungsformen enthält die Felgenbremse weiterhin ein Federelement, welches auf zumindest einen Arm einwirkt, so dass der Bremsbelag gegen die Federkraft gegen die rotierenden Reibpartner führbar ist. Dieses Merkmal stellt sicher, dass die Arme beim Lösen der Bremse durch die Federkraft in ihre Ausgangsstellung zurückbewegt werden, so dass die Bremse ohne weiteren Benutzereingriff ihre geöffnete Stellung einnimmt.

In einigen Ausführungsformen kann das Federelement als Spiralfeder ausgeführt sein, welche konzentrisch um die Achse des Schwenklagers angeordnet ist. Dies erlaubt eine geschützte Einbaulage, so dass die Bremse durch Staub und Feuchtigkeit weniger beeinflusst wird.

In einigen Ausführungsformen kann das Federelement eine Blattfeder enthalten, welche an einem unbeweglichen Teil des Fahrzeuges oder an einem unbeweglichen Teil der Felgenbremse und am oberen und/oder unteren Längsabschnitt des Armes befestigt ist. Eine solche Blattfeder erlaubt einen kompakten Aufbau des Schwenklagers, so dass die Felgenbremse eine aerodynamische, elegante Erscheinungsform erhält.

In einigen Ausführungsformen kann das Schwenklager auf einem Träger angeordnet sein, welcher mit dem Rahmen eines Fahrzeuges verbindbar ist. Hierdurch wird eine einfache Befestigung mit nur einer Befestigungsschraube am Rahmen ermöglicht sowie der Austausch konventioneller mechanischer Felgenbremsen gegen die erfindungsgemäße Felgenbremse ermöglicht. Weiterhin vermeidet diese Ausführungsform die Notwendigkeit spezieller Anbauteile am Rahmen, so dass eine breite Einsetzbarkeit an verschiedenen Fahrzeugmodellen ermöglicht wird.

In einigen Ausführungsformen kann die Blattfeder am Träger und am oberen Längsabschnitt des Armes befestigt sein. Hierdurch ergibt sich ein kompakter Aufbau, wobei alle Teile unverlierbar an der Felgenbremse befestigt sind, so dass diese bei Transport, Verkauf und Montage nicht verloren gehen können.

In einigen Ausführungsformen kann der Träger einen ersten Steg und einen zweiten Steg aufweisen, wobei eine Achse des Schwenklagers sowohl im ersten als auch im zweiten Steg aufgenommen ist. Hierdurch wird das Auftreten eines Biegemomentes auf die Befestigung des Schwenklagers im Träger vermieden, so dass das Schwenklager eine größere Stabilität aufweist und die Bremskraft gesteigert werden kann. Weiterhin kann der Mittelsteg zur Befestigung und/oder zur Abstützung des Hydraulikzylinders dienen.

In einigen Ausführungsformen kann der Hydraulikzylinder ein doppelt wirkender Hydraulikzylinder sein, so dass die Arme in beide Bewegungsrichtungen hydraulisch bewegbar sind. Hierdurch kann die Felgenbremse ohne ein Federelement von einer geöffneten in eine geschlossene Stellung und von der geschlossenen wieder in die geöffnete Stellung bewegt werden.

In einigen Ausführungsformen kann zumindest einer der Arme eine konkave Innenseite aufweisen, welche den Hydraulikzylinder zumindest teilweise einschließt. Dies ermöglicht eine aerodynamisch günstige Verkleidung des Hydraulikzylinders und/oder des Keilelementes, so dass der Luftwiderstand der vorgeschlagenen Felgenbremse weiter verringert wird.

Erfindungsgemäß wird ein Verfahren zur Montage einer hydraulischen Bremse vorgeschlagen. Die hydraulische Bremse erhält dabei zumindest einen Geber und einen Nehmer, welche mit einer Hydraulikleitung verbunden sind. Der Geberzylinder, der Nehmerzylinder und die Hydraulikleitung sind mit einer inkompressiblen Flüssigkeit als Hydraulikfluid befüllt, beispielsweise eine Flüssigkeit mit zumindest einem Mineralöl oder zumindest einem Silikonöl oder zumindest einem Alkohol oder einer Mischung mehrerer Polyglykole. Für die Funktion der hydraulischen Bremse ist es erforderlich, dass keine Lufteinschlüsse bzw. keine Lufteinschlüsse mit einer bestimmten, vorgebbaren Größe in der Hydraulikleitung, dem Geberzylinder oder dem Nehmerzylinder vorhanden sind. Meist werden die genannten Komponenten Geber, Nehmer und Hydraulikleitung bereits als Teil des Fertigungsprozesses im Herstellwerk der Bremse miteinander verbunden und mit dem Hydraulikfluid befüllt. Dies erlaubt einerseits eine einfache Montage am Fahrzeug durch den Endbenutzer oder den Hersteller des Fahrzeuges und einen probeweisen Betrieb der Bremse in der Endkontrolle oder zum Zwecke der Qualitätssicherung.

Sofern es sich bei der hydraulischen Bremse um eine Scheibenbremse handelt, kann der Nehmer einen Scheibenbremssattel umfassen, welcher beispielsweise am Gabelrohr oder am Hinterbau eines Fahrrades befestigt werden kann, sodass zumindest ein Bremsbelag mit einer Scheibenbremse in Kontakt bringbar ist. Wenn es sich bei der hydraulischen Bremse um eine Felgenbremse handelt, kann der Nehmer beidseitig der Laufräder befestigt werden, sodass zumindest ein Bremsbelag mit den Felgenflanken in Kontakt bringbar ist.

Zur Montage der hydraulischen Bremse am Fahrzeug wird der Geber an einer für den Fahrer zugänglichen Stelle montiert, sodass der Fahrer bei Betrieb des Fahrzeuges über den Geber einen Bremsdruck in der Hydraulikleitung aufbauen kann. Sodann wird der Nehmer am Fahrzeug montiert, sodass dieser mit einem rotierenden Reibpartner in Eingriff bringbar ist, um die erforderliche Bremskraft zu erzeugen. Schließlich wird die Hydraulikleitung am Fahrzeug verlegt, sodass diese die Bewegung beweglicher Fahrzeugteile nicht behindert und im Normalbetrieb des Fahrzeuges nicht beschädigt werden kann.

In einigen Montagesituationen kann es für den Monteur hilfreich sein, den Geber und/oder den Nehmer von der Hydraulikleitung zu trennen, um die Montage zu erleichtern oder überhaupt erst zu ermöglichen. In diesen Fällen bestand bei den bekannten Montageverfahren die Gefahr, dass Hydraulikfluid an der Trennstelle der Hydraulikleitung austritt, sodass Lufteinschlüsse die Funktion der hydraulischen Bremse nach der Montage am Fahrzeug beeinträchtigen. Falls der Lufteinschluss erkannt wird, kann die hydraulische Bremse zwar entlüftet werden, was jedoch einen zusätzlichen Arbeitsschritt darstellt.

Erfindungsgemäß wird nun vorgeschlagen, den lichten Querschnitt der Hydraulikleitung in zumindest einem Längsabschnitt zu verringern. Dies kann in einigen Ausführungsformen der Erfindung durch Quetschen bzw. Verpressen der Hydraulikleitung erfolgen. In anderen Ausführungsformen der Erfindung kann die Hydraulikleitung verschweißt werden, beispielsweise durch thermisches Schweißen, durch Laserschweißen oder Ultraschallschweißen. In einigen Ausführungsformen der Erfindung kann die Hydraulikleitung erst verpresst und dann verschweißt werden.

Unter dem lichten Querschnitt wird im Sinne der vorliegenden Beschreibung der Innenquerschnitt der Hydraulikleitung verstanden, durch welchen das Hydraulikfluid bei Betrieb der Fahrzeugbremse strömt. Unter dem verringerten lichten Querschnitt wird im Sinne der vorliegenden Beschreibung der Innenquerschnitt des gequetschten, verpressten bzw. verschweißten Längsabschnittes der Hydraulikleitung verstanden, welcher den Durchfluss des Hydraulikfluides verhindert oder zumindest erschwert.

In einigen Ausführungsformen der Erfindung kann das Verringern des lichten Querschnittes mehrdimensional erfolgen, sodass der äußere Querschnitt des Längsabschnitts mit verringertem lichten Querschnitt eine etwa polygonale Form aufweist. In diesem Fall kann der äußere Querschnitt des Längsabschnitts mit verringertem lichten Querschnitt den Ursprungsdurchmesser der Hydraulikleitung nicht überschreiten, d.h. der Umkreis des polygonalen Querschnittes ist kleiner als der Ursprungsdurchmesser.

Das Verringern des lichten Querschnittes kann unmittelbar vor der Montage der hydraulischen Bremse am Fahrzeug erfolgen. In anderen Ausführungsformen der Erfindung kann das Verringern des lichten Querschnittes nach der Herstellung und Funktionsprüfung der hydraulischen Bremse im Herstellwerk erfolgen, sodass der Monteur die Leitung nur noch an der vorgesehenen Stelle auftrennen muss, um die hydraulische Bremse am Fahrzeug montieren zu können. In diesem Fall kann die Hydraulikleitung an oder neben dem Längsabschnitt mit verringertem lichtem Querschnitt aufgetrennt werden, ohne dass das Hydraulikfluid aus der Hydraulikleitung austritt.

Nach der Montage des Gebers, des Nehmers und der Hydraulikleitung am Fahrzeug kann der zumindest eine Längsabschnitt mit verringertem lichten Querschnitt von der Hydraulikleitung abgetrennt werden. Die verbleibende Leitungslänge mit dem ursprünglichen lichten Querschnitt kann dann mit dem Geber bzw. dem Nehmer verbunden werden, sodass die Funktion der hydraulischen Bremse wiederhergestellt wird. Auf diese Weise kann die Montage der hydraulischen Bremse erfolgen, ohne dass die Gefahr des unerwünschten Austrittes von Hydraulikfluid aus dem offenen Ende der Hydraulikleitung besteht. Da die Hydraulikleitung vor der Wiedermontage am Geber bzw. Nehmer ohnehin um den Längsabschnitt mit verringertem lichtem Querschnitt gekürzt werden muss, kann die Hydraulikleitung gleichzeitig auf das benötigte Maß abgelängt werden, sodass keine überschüssige Leitungslänge am Fahrzeug verbleibt. Dies verbessert gleichermaßen die Funktion wie die Ästhetik des Fahrzeuges bzw. des Bremssystems.

In einigen Ausführungsformen der Erfindung kann zumindest ein Längsabschnitt mit verringertem lichtem Querschnitt in der Nähe des Gebers und/oder in der Nähe des Nehmers angeordnet werden. Dementsprechend kann die Hydraulikleitung zur Montage am Fahrzeug in der Nähe des Gebers aufgetrennt werden, um nach erfolgter Montage mit dem Geber wieder verbunden zu werden oder in der Nähe des Nehmers aufgetrennt werden, um nach der Montage mit dem Nehmer wieder verbunden zu werden. In einigen Ausführungsformen der Erfindung kann die Hydraulikleitung beidseitig aufgetrennt werden und so völlig unabhängig von Geber und Nehmer am Fahrzeug verlegt bzw. montiert werden.

In einigen Ausführungsformen der Erfindung ist der Längsabschnitt mit verringertem lichtem Querschnitt etwa 1 cm bis etwa 15 cm vom Geber und/oder vom Nehmer entfernt. Dies ermöglicht eine gute Zugänglichkeit mit entsprechendem Werkzeug, um die Hydraulikleitung vor der Montage aufzutrennen. Andererseits ist die nach dem Auftrennen verbleibende Leitungslänge hinreichend groß, um den Wiederanschluss von Geber und Nehmer in den meisten Anwendungsfällen zu ermöglichen und die Abfallmenge gering zu halten.

In einigen Ausführungsformen der Erfindung kann der lichte Querschnitt in zwei Längsabschnitten verringert werden, welche etwa 0,5 bis etwa 3 cm voneinander entfernt sind. In diesem Fall kann die Hydraulikleitung zwischen beiden Längsabschnitten aufgetrennt werden, sodass beide Enden vor dem Verlust von Hydraulikfluid geschützt sind. Dies erlaubt eine besonders zuverlässige Wiedermontage der Hydraulikleitung, da in keine der beiden zu verbindenden Teile Lufteinschlüsse vorhanden sind.

In einigen Ausführungsformen der Erfindung kann das Verlegen der Hydraulikleitung am Fahrzeug dadurch erfolgen, dass die Leitung durch zumindest eine Öffnung eines Rahmenrohres des Fahrzeuges geführt wird. In diesem Fall ist die Hydraulikleitung bei Betrieb des Fahrzeuges im Inneren des Rahmenrohres geschützt. Hierzu weist das Rahmenrohr zwei Öffnungen auf, welche in der Nähe des Gebers und in der Nähe des Nehmers angeordnet sein können oder nahe an den beiden Enden des Rahmenrohres, beispielsweise dem Oberrohr, dem Unterrohr, oder einer Hinterbaustrebe eines Fahrrades, und durch welche die Hydraulikleitung ein- und austritt. In diesem Fall erlaubt das erfindungsgemäße Verfahren eine besonders zuverlässige Montage, da die Hydraulikleitung auch dann vor Verlust des Hydraulikfluides geschützt ist, wenn diese bei der Montage mit dem freien Ende an der Innenseite des Rahmenrohres anschlägt.

In einigen Ausführungsformen der Erfindung kann der verringerte lichte Querschnitt einen Durchmesser von weniger als 0,5 mm, weniger als 0,3 mm oder weniger als 0,1 mm aufweisen. In einigen Ausführungsformen der Erfindung kann der verringerte lichte Querschnitt vollständig geschlossen sein, sodass der Austritt von Hydraulikfluid durch den verringerten lichten Querschnitt vollständig ausgeschlossen ist.

Nachfolgend soll die Erfindung anhand von Ausführungsbeispielen und Figuren ohne Beschränkung des allgemeinen Erfindungsgedankens näher erläutert werden. Dabei zeigt:
- Figur 1: einen Längsschnitt durch eine Felgenbremse.
- Figur 2: zeigt eine perspektivische Darstellung der Felgenbremse von der dem Rahmen abgewandten Seite.
- Figur 3: zeigt eine perspektivische Darstellung der Felgenbremse von der Befestigungsseite.
- Figur 4: zeigt den Schnitt gemäß Figur 1 in einer perspektivischen Darstellung.
- Figur 5: zeigt ein Detail des Keilelementes und der Arme.
- Figur 6: zeigt eine Ansicht der Felgenbremse von unten.
- Figur 7: zeigt eine Ansicht des Keilelementes.
- Figur 8: zeigt eine perspektivische Darstellung des Keilelementes.
- Figur 9: zeigt eine schematische Darstellung einer erfindungsgemäßen hydraulischen Bremse.
- Figur 10: zeigt den Querschnitt der Hydraulikleitung in einem ersten Längsabschnitt.
- Figur 11: zeigt den Querschnitt der Hydraulikleitung in einem zweiten Längsabschnitt.
- Figur 12: zeigt ein Flussdiagramm des erfindungsgemäßen Verfahrens.

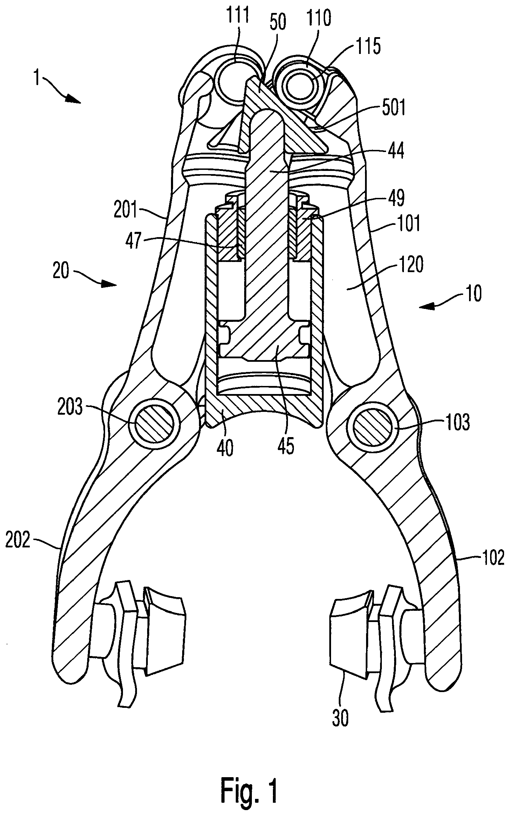

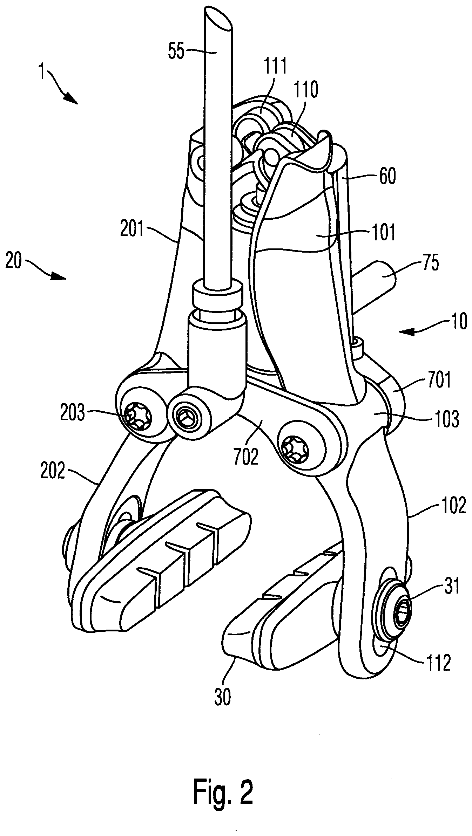

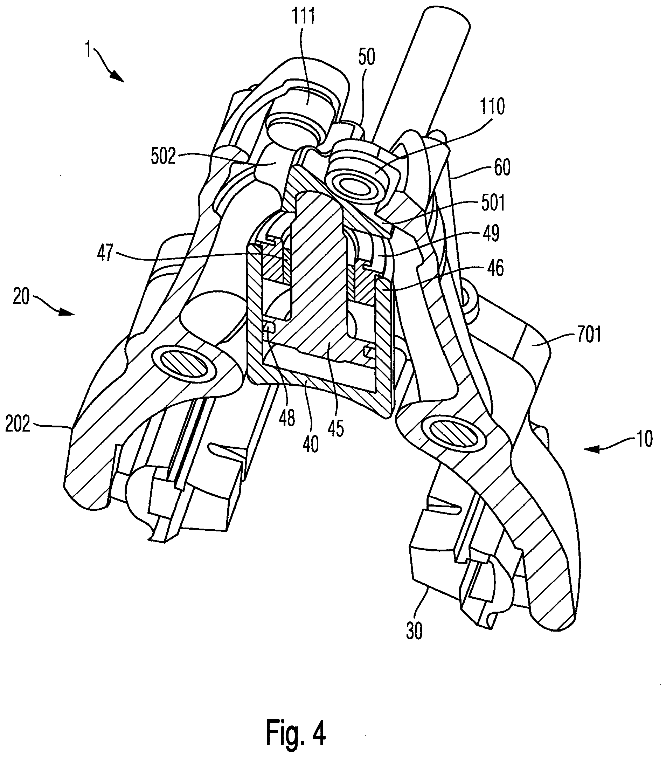

Anhand der Figuren 1, 2, 3 und 4 wird eine Ausführungsform einer Felgenbremse näher erläutert. Die Felgenbremse weist einen rechten Arm 10 und einen linken Arm 20 auf. Die Bezeichnung "rechts" und "links" ist dabei lediglich beispielhaft gewählt, um auszudrücken, dass die Arme beiderseits des rotierenden Reibpartners angeordnet sind. Je nachdem ob die Felgenbremse 1 ablaufend oder auflaufend am Rahmen des Fahrzeuges befestigt ist, ändert sich die tatsächliche Montageseite des rechten und linken Armes 10 und 20 am Fahrzeug.

Jeder Arm weist einen oberen Längsabschnitt 101 bzw. 201 und einen unteren Längsabschnitt 102 bzw. 202 auf. Zwischen beiden Längsabschnitten ist ein Schwenklager 103 bzw. 203 angeordnet. Der obere Längsabschnitt 101, das äußere Gehäuse des Schwenklagers 103 und der untere Längsabschnitt 102 können in einigen Ausführungsformen einstückig gefertigt sein, beispielsweise als Guss- oder Schmiedeteil. Der rechte Arm 10 und/oder der linke Arm 20 können in einigen Ausführungsformen der Erfindung aus einer Aluminiumlegierung oder einer Magnesiumlegierung oder einem Edelstahl gefertigt sein. In anderen Ausführungsformen der Erfindung können die Arme 10 und 20 aus faserverstärktem Kunststoff gefertigt sein, beispielsweise Kohlenstofffasern, welche mit einem Epoxidharz getränkt sind.

Die Schwenklager 103 und 102 können in einigen Ausführungsformen am Fahrradrahmen befestigt sein, beispielsweise als Anlötsockel. In der in den Figuren 1 bis 4 gezeigten Ausführungsform sind die Schwenklager 103 und 203 auf einem Träger 70 angeordnet, welcher mit dem Rahmen eines Fahrzeuges verbindbar ist. Hierzu ist am Träger 70 ein Gewindebolzen 75 vorgesehen, welcher durch eine entsprechende Bohrung am Rahmen des Fahrzeuges geführt und mit einer Mutter verschraubt werden kann. Der Träger 70 erlaubt den Austausch an sich bekannter, mechanischer Felgenbremsen durch die erfindungsgemäße Bremse, da keinerlei zusätzliche Anbauteile am Rahmen des Fahrzeuges befestigt werden müssen.

Die unteren Längsabschnitte 102 und 202 der Arme 10 und 20 tragen jeweils einen Bremsbelag 30, welcher als feststehender Reibpartner gegen den rotierenden Reibpartner geführt wird und durch die entstehende Reibungskraft eine Verringerung der Geschwindigkeit des Fahrzeuges bewirkt. Der Bremsbelag 30 kann in einigen Ausführungsformen der Erfindung aus einer Gummimischung bestehen. Der Bremsbelag 30 kann in an sich bekannter Weise eine Profilierung aufweisen, um Wasser abzuführen, so dass die Bremsleistung auch bei feuchter Witterung gewahrt bleibt.

Der Bremsbelag 30 kann mittels einer Befestigungsschraube 31 am Arm 10 bzw. 20 befestigt sein. Hierzu können in den Armen 10 und 20 Langlöcher 112 und 212 angeordnet sein, so dass der Bremsbelag zur Anpassung an unterschiedliche Rahmengrößen, unterschiedliche Felgenhöhen und unterschiedliche Rahmengeometrien verschiebbar und damit einstellbar ist.

Der obere Längsabschnitt 101 und 201 der Arme 10 und 20 weist eine konvexe Außenkontur und eine konkave Innenform 120 auf, so dass die Arme 10 bzw. 20 den Hydraulikzylinder 40 zumindest teilweise umgeben. Dies dient einer verbesserten Aerodynamik und kann in anderen Ausführungsformen der Erfindung auch anders ausgeführt sein. Der Hydraulikzylinder 40 weist einen zylindrischen Grundkörper 46 auf. Im Grundkörper 46 ist ein Kolben 45 linear verschieblich aufgenommen. Der Kolben 45 kann in einigen Ausführungsformen der Erfindung eine Dichtnut 48 aufweisen, in welche eine Dichtung aufgenommen sein kann, beispielsweise aus einem Elastomer. Der Kolben 45 ist mit einem Pleuel 44 verbunden. In einigen Ausführungsformen der Erfindung kann das Pleuel 44 und der Kolben 45 einstückig hergestellt sein, beispielsweise als Gussteil oder als Drehteil. Der Hydraulikzylinder 40 ist an seinem oberen Ende durch einen Deckel 49 abgeschlossen, in welchem eine Dichtung 47 aufgenommen ist, welche die Durchführung des Pleuels 44 durch den Deckel 49 abdichtet. Der Hydraulikzylinder 40 kann über eine Leitung 55 mit einem Hydraulikfluid beaufschlagt werden, beispielsweise ein Mineralöl. Hierdurch wird der Kolben 45 nach oben bewegt.

Am Ende des Pleuels 44 ist ein Keilelement 50 angeordnet. Bei Bewegung des Kolbens 45 bewegt sich das Keilelement 50 korrespondierend mit dem Kolben 45 aufwärts bzw. abwärts.

Das Keilelement 50 steht über seine Flanken 501 und 502 mit den oberen Längsabschnitten 101 und 201 der Arme 10 und 20 in Verbindung. An der Kontaktstelle der Arme 10 und 20 mit dem Keilelement 50 sind drehbar gelagerte Rollen 110 und 111 vorhanden, so dass bei Bewegung des Keilelementes 50 ein verschleiß- und reibungsarmes Abrollen ermöglicht wird. Hierzu können die Rollen mit Gleitlagern 115 aufgenommen sein. In anderen Ausführungsformen können die Rollen 110 und 111 auch entfallen, so dass die oberen Längsabschnitte 101 und 201 der Arme 10 und 20 in gleitender Verbindung mit dem Keilelement 50 stehen.

Bei einer Aufwärtsbewegung des Keilelementes 50 vergrößert sich der Abstand der oberen Längsabschnitte 101 und 201 der Arme 10 und 20. Aufgrund der Schwenklager 103 und 203 wird dadurch der Abstand zwischen den unteren Längsabschnitten 102 und 202 verringert, so dass die Bremsbeläge 30 gegen den rotierenden Reibpartner in eine Bremsstellung geführt werden. Wenn der Kolben 45 mit dem Keilelement 50 nach unten bewegt wird, verringert sich der Abstand der oberen Längsabschnitte 101 und 102, so dass sich der Abstand der unteren Längsabschnitte 102 und 202 vergrößert und die Bremsbeläge 30 vom rotierenden Reibpartner gelöst werden. Die Bremse befindet sich dann in einer offenen Stellung.

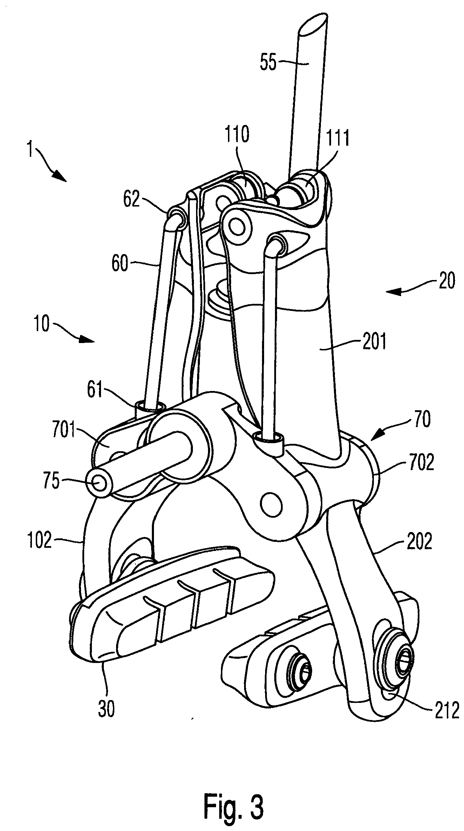

Damit die Bremse zuverlässig in die offene Stellung gebracht werden kann, sind Federelemente 60 vorgesehen. Die Federelemente 60 sind als gerade Blattfedern ausgeführt, wie anhand der Figur 3 ersichtlich ist. Die Federelemente 60 sind in einer Öffnung 61 am Träger 70 sowie in einer Öffnung 62 am oberen Längsabschnitt 101 des Armes 10 befestigt. Beim Verschwenken des Armes 10 bzw. 20 kommt es zur Verringerung des relativen Abstandes der Bohrungen 61 und 62, so dass das Federelement 60 von einer eher geraden in eine eher gekrümmte, ausgeknickte Stellung verformt wird. Die Rückstellkraft des elastischen Materials des Federelementes 60 sorgt dafür, dass die Bremsbeläge 30 von der Bremsstellung in die offene Stellung bewegt werden. In anderen Ausführungsformen kann das Federelement 60 zur Erhöhung der Federkraft auch eine Spiralfeder mit zumindest einer Windung umfassen.

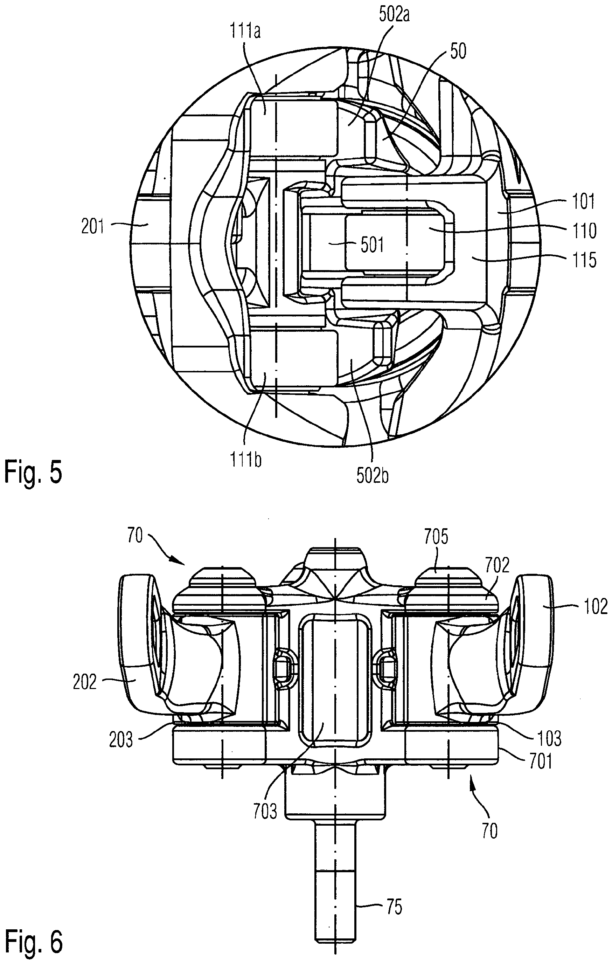

Figur 5 zeigt die Aufsicht auf die oberen Längsabschnitte 101 und 201 der Arme 10 und 20. Aus Figur 5 ist ersichtlich, dass die Rolle 110 in etwa mittig am Querschnitt des oberen Längsabschnittes 101 des rechten Armes 10 angeordnet ist. Die Rolle 110 ist in einer Gabel 115 gelagert, so dass das Auftreten von Biegemomenten auf die Lagerung der Rolle 110 vermieden wird. Die Gabel 115 kann einstückig mit dem oberen Längsabschnitt 101 des Armes 10 gefertigt sein, beispielsweise als Guss- oder Schmiedeteil.

Der obere Längsabschnitt 201 des linken Armes 20 weist zwei Rollen 111a und 111b auf. Auch diese sind beidseitig gelagert, so dass die Lagerung der Rollen 111 keinen Biegemomenten ausgesetzt ist.

Unterhalb der Rollen 110 und 111 ist das Keilelement 50 ersichtlich. Das Keilelement 50 weist eine erste Flanke 501 auf, welche mit der Rolle 110 in Kontakt steht sowie zwei zweite Flanken 502a und 502b, auf welchen die zugehörigen Rollen 111a und 111b abrollen. Hierdurch werden die vom Keilelement 50 auf die Arme 10 und 20 übertragenen Kräfte symmetrisch in beide Arme 10 und 20 eingeleitet, so dass das Auftreten von Biegemomenten auf die Schwenklager 103 und 203 vermieden wird. Gleichwohl kann die Rolle 110 mit der Gabel 115 in den Zwischenraum zwischen die Rollen 111a und 111b eintauchen, und so einen engeren Schließwinkel in der geöffneten Stellung ermöglichen.

Figur 6 zeigt die Felgenbremse in einer Ansicht von unten. Insbesondere ist in Figur 6 der Träger 70 erkennbar, welcher einen ersten Steg 701 und einen zweiten Steg 702 aufweist. Die Stege 701 und 702 sind durch einen Mittelsteg 703 verbunden. Der Träger 70 kann einstückig gefertigt sein, beispielsweise aus einem Metall oder einer Legierung oder einem faserverstärkten Kunststoff. Der Träger 70 kann dementsprechend als Gussteil oder als Schmiedeteil hergestellt sein oder in einer Form laminiert werden.

Am Träger 70 ist ein Gewindebolzen 75 befestigt, mit welchem der Träger 70 und damit die Felgenbremse 1 am Rahmen eines Fahrzeuges befestigt werden kann. Weiterhin sind am Träger 70 die Schwenklager 103 und 203 befestigt, welche jeweils eine Drehachse 705 aufweisen. In einigen Ausführungsformen kann die Drehachse 705 durch eine Bohrung im zweiten Steg 702 geführt und in einer Gewindebohrung im ersten Steg 701 verschraubt sein. Dies erlaubt eine einfache Montage der Arme 10 und 20 sowie eine rasche Demontage zu Wartungsarbeiten, beispielsweise zur Reinigung und Schmierung der Schwenklager 103 und 203. Der Mittelsteg 703 dient einerseits der Verbindung der beiden Stege 701 und 702. Weiterhin kann sich der Hydraulikzylinder 40 mit seiner Unterseite am Mittelsteg 703 abstützen und so die erforderliche Gegenkraft zur Bewegung des Keilelementes 50 auf den Rahmen des Fahrzeuges übertragen.

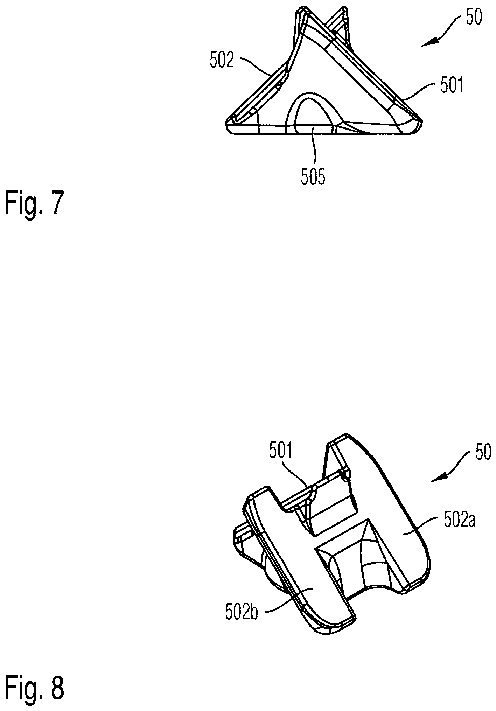

Anhand der Figuren 7 und 8 wird eine Ausführungsform des Keilelementes 50 näher erläutert. Das Keilelement weist auf einer Seite zwei zweite Flanken 502a und 502b auf, welche über die Rollen 111a und 111b die Kraft auf den zweiten Arm 20 übertragen. Gegenüberliegend ist eine einzige erste Flanke 501 angeordnet, welche über die Rolle 110 die Betätigungskraft auf den rechten Arm 10 überträgt.

Die ersten und zweiten Flanken 501 und 502 können konkave, konvexe oder geradlinige Längsabschnitte aufweisen, so dass der Verlauf der Bremskraft in Abhängigkeit der Stellung des Kolbens variabel gewählt werden kann.

Weiterhin weist das Keilelement 50 eine Befestigungsöffnung 505 auf, mit welcher das Keilelement 50 am Pleuel 44 des Hydraulikzylinders 40 befestigt ist. Die Befestigung kann in einigen Ausführungsformen der Erfindung durch einen Presssitz oder eine formschlüssige Passung erfolgen. Auf diese Weise kann das Keilelement 50 leicht ausgetauscht werden, um durch die Verwendung unterschiedlicher Keilelemente ein unterschiedliches Ansprechverhalten der Felgenbremse zu realisieren, so dass die Felgenbremse an unterschiedliche Streckenprofile oder unterschiedliche Präferenzen des Fahrers angepasst werden kann.

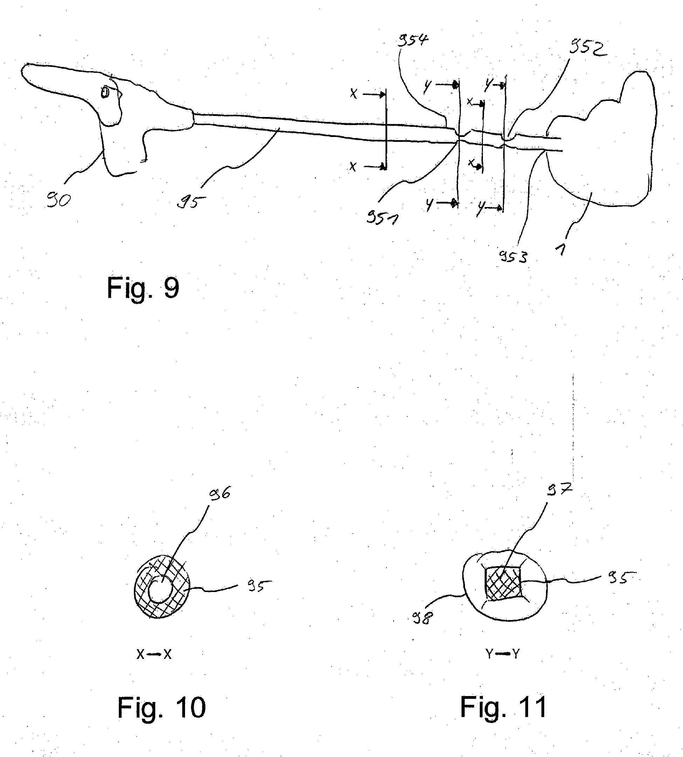

Figur 9 zeigt eine schematische Darstellung einer hydraulischen Bremse. Die hydraulische Bremse gemäß Figur 9 kann insbesondere an muskelgetriebenen Fahrzeugen eingesetzt werden, wie beispielsweise Fahrrädern, Liegerädern, Dreirädern oder Rollern. Die hydraulische Bremse gemäß Figur 9 enthält zumindest einen Nehmer 1, welcher einen Teil einer an sich bekannten hydraulischen Felgenbremse oder einer hydraulischen Scheibenbremse darstellt. Der Nehmer 1 ist dazu eingerichtet, einen Bremsbelag in Abhängigkeit des Druckes im Hydrauliksystem gegen einen rotierenden Reibpartner zu führen, um auf diese Weise eine Bremskraft zur Verzögerung des Fahrzeuges zu erzeugen.

Weiterhin enthält die Bremse einen Geber 90. Der Geber 90 enthält in an sich bekannter Weise einen Hydraulikzylinder, welcher mit einem Hydraulikfluid gefüllt ist. Auf den Hydraulikzylinder wirkt ein Handhebel oder ein Pedal, mit welchem der Benutzers des Fahrzeuges eine Kraft auf den Kolben des Hydraulikzylinders ausüben kann, um einen Druck im Hydrauliksystem aufzubauen und damit die Bremskraft zu dosieren.

Zur Übertragung des Druckes bzw. der Bremskraft dient eine Hydraulikleitung 95, welche den Geber 90 mit dem Nehmer 1 verbindet. Die Hydraulikleitung kann in einigen Ausführungsformen der Erfindung ein Polymermaterial als fluiddichte Hülle enthalten oder daraus bestehen. Die Länge der Hydraulikleitung 95 kann in einigen Ausführungsformen der Erfindung etwa 80 cm, etwa 170 cm oder etwa 250 cm betragen, je nachdem ob die hydraulische Bremse am Vorder- oder Hinterrad eines Fahrzeuges eingesetzt wird und je nachdem, wie lang das Fahrzeug ist.

In einigen Ausführungsformen der Erfindung kann der Geber 90 und der Nehmer 1 bereits im Herstellwerk mit der Hydraulikleitung 95 verbunden werden. Ebenso kann bereits im Herstellwerk ein Hydraulikfluid eingefüllt werden, beispielsweise ein, Mineralöl, ein Alkohol oder eine Mischung verschiedener Öle oder Alkohole. Dies erlaubt einen Funktionstest der hydraulischen Bremse vor der Auslieferung und eine vereinfachte Qualitätssicherung.

Um den Abnehmer der hydraulischen Bremse die Montage an einem Fahrzeug zu erleichtern, wird nach dem erfolgten Funktionstest der lichte Querschnitt in zumindest einem Längsabschnitt 951 und/oder 952 verringert. Diese Verringerung des Querschnittes kann in einigen Ausführungsformen der Erfindung durch Quetschen und/oder Verschweißen der Hydraulikleitung 95 im Längsabschnitt 951 und/oder 952 erfolgen.

Die Figuren 10 und 11 illustrieren den Querschnitt entlang der Schnitte X-X und Y-Y. Figur 10 zeigt dabei den unveränderten lichten Querschnitt 96 der Hydraulikleitung 95. Der Querschnitt 96 erlaubt ein ungehindertes Zirkulieren des Hydraulikfluides, sodass eine Bremskraft vom Geber 90 auf den Nehmer 1 übertragen werden kann. Demgegenüber zeigt Figur 11 den Querschnitt im Längsabschnitt 951 bzw. 952. Im dargestellten Ausführungsbeispiel wurde die Hydraulikleitung 95 von zwei Seiten gequetscht, sodass sich ein etwa quadratischer Querschnitt 97 ergibt, dessen lichte Weite geringer ist als die lichte Weite des Querschnitts 96 gemäß Figur 10. In einigen Ausführungsformen der Erfindung kann der Querschnitt 97 vollständig geschlossen sein, sodass kein Hydraulikfluid hindurchtreten kann. Hierzu kann der Querschnitt 97 neben dem Verpressen bzw. Quetschen zusätzlich durch Erwärmen des Polymermaterials der Hydraulikleitung 95 bis zum Erweichen zusätzlich verschweißt werden. Das Verschweißen kann durch den Kontakt mit einem erhitzten Quetschwerkzeug, durch Ultraschallschweißen oder Laserschweißen erfolgen. Selbstverständlich sind auch andere, hier nicht explizit genannte Schweißverfahren möglich.

In Figur 11 ist weiterhin der ursprüngliche Querschnitt 98 der Hydraulikleitung dargestellt. Wie ersichtlich ist, ist der Querschnitt der Hydraulikleitung 95 im Längsabschnitt 951 und 952 in einigen Ausführungsformen der Erfindung in allen Richtungen kleiner als der ursprüngliche Querschnitt 98, sodass die Hydraulikleitung 95 einfach am Fahrzeug montiert und durch enge Öffnungen gefädelt werden kann, ohne dass der gequetschte bzw. verschweißte Querschnitt die Durchführung behindert. Der verringerte Querschnitt 97 ist also kleiner oder maximal gleich groß wie der ursprüngliche Querschnitt 98 bzw. im Fall einer polygonalen Quetschung bildet der ursprüngliche runde Querschnitt 98 den Umkreis für den verringerten Querschnitt 97.

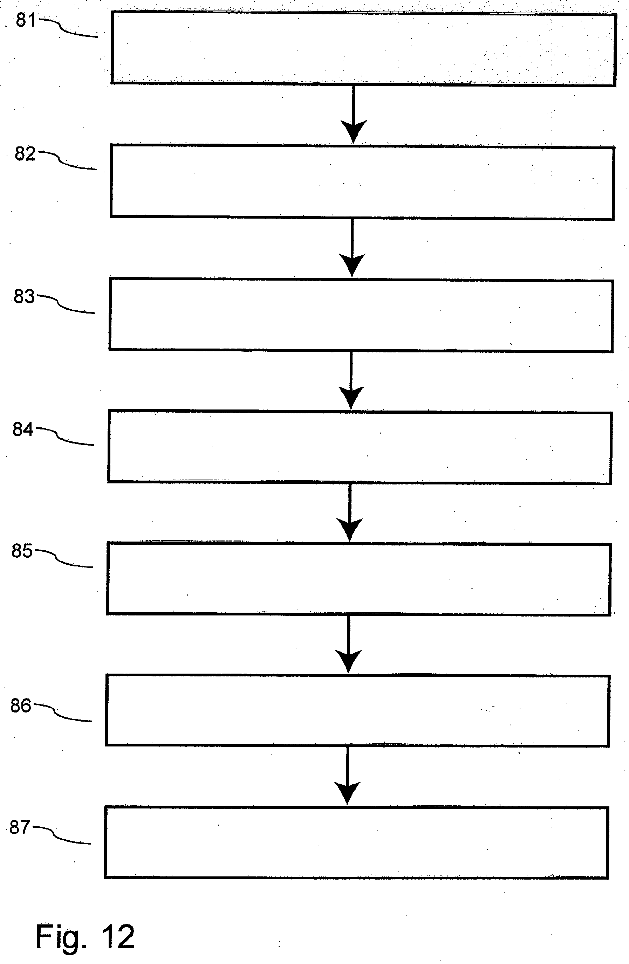

Anhand des Flussdiagrammes gemäß Figur 12 wird das erfindungsgemäße Verfahren nochmals erläutert. Zunächst wird die hydraulische Bremse in an sich bekannter Weise hergestellt, endmontiert und geprüft. Sodann wird im ersten Verfahrensschritt 81 der lichte Querschnitt der Hydraulikleitung in einem Längsabschnitt 951 durch Quetschen und/oder Verschweißen reduziert. Der lichte Querschnitt, d.h. der für die Strömung des Fluides zur Verfügung stehende Querschnitt, kann danach einen Durchmesser von weniger als 0,5 mm, weniger als 0,3 mm, weniger als 0,1 mm oder 0 mm aufweisen.

Im Anschluss daran folgt als optionaler zweiter Verfahrensschritt 82 das Verringern des lichten Querschnittes der Hydraulikleitung in einen zweiten Längsabschnitt 952. Auch in diesem Fall kann der verringerte lichte Querschnitt, d.h. der für die Strömung des Hydraulikfluides zur Verfügung stehende Querschnitt, einen Durchmesser von weniger als 0.5 mm, weniger als 0.3 mm, weniger als 0.1 mm oder 0 mm betragen. Nach der Durchführung der ersten beiden Verfahrensschritte ist die Strömung des Hydraulikfluides in der Hydraulikleitung 95 somit vollständig behindert oder zumindest erheblich eingeschränkt. Dennoch sind der Geber 90, der Nehmer 1 und die Hydraulikleitung 95 noch fest miteinander verbunden, sodass diese bei einem eventuellen Transport der Bremse zum Endbenutzer nicht getrennt werden können.

Im nun folgenden dritten Verfahrensschritt 83 wird die Hydraulikleitung 95 durch Sägen oder Schneiden getrennt. Sofern der lichte Querschnitt in zwei Längsabschnitten 951 und 952 verringert wurde, erfolgt das Trennen bevorzugt zwischen diesen Längsabschnitten. Im anderen Fall kann die Hydraulikleitung 95 an einer Stelle zwischen dem Längsabschnitt 951 und dem Nehmer 1 oder zwischen dem Längsabschnitt 951 und dem Geber 90 getrennt werden.

Im Verfahrensschritt 84 wird der Geber an seiner endgültigen Position am Fahrzeug montiert.

Im Verfahrensschritt 85 wird der Nehmer an seiner endgültigen Position am Fahrzeug montiert.

Im Verfahrensschritt 86 wird die Hydraulikleitung 95 zwischen dem Geber und dem Nehmer verlegt. Dieser Verfahrensschritt kann das Durchführen der Hydraulikleitung durch zumindest eine Öffnung eines Rahmenrohres einschließen. Sofern das freie Ende der Hydraulikleitung 95 dabei mit dem Rahmenrohr in Kontakt kommt, an dieses anstößt oder Vibrationen ausgesetzt wird, kann dennoch kein Hydraulikfluid austreten, da der Querschnitt im Längsabschnitt 951 und/oder im Längsabschnitt 952 verringert ist. Selbstverständlich können der vierte, fünfte und sechste Verfahrensschritt 84, 85 und 86 auch in anderer Reihenfolge durchgeführt werden.

Schließlich wird im Verfahrensschritt 87 die Hydraulikleitung 95 erneut an der Trennstelle 954 abgetrennt. Weiterhin wird die Hydraulikleitung an der Anschlussstelle 953 des Nehmers 1 geöffnet. Der Längsabschnitt zwischen der Trennstelle 954 und der Anschlussstelle 953 wird als Abfallstück entsorgt. Schließlich kann die Hydraulikleitung 95 mit dem Nehmer 1 funktionsfähig verbunden werden. Die hydraulische Bremse ist dann einsatzfähig am Fahrzeug montiert, ohne dass es eines erneuten Befüll- und/oder Entlüftungsvorganges des Hydrauliksystemes bedarf.

Selbstverständlich erlaubt das in der vorstehenden Beschreibung offenbarte Lösungsprinzip auch Abwandlungen, ohne den allgemeinen Erfindungsgedanken zu verlassen. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die Beschreibung "erste", "zweite", "dritte" und "vierte" Merkmale definieren, so dient diese Bezeichnung der Unterscheidung gleichartiger Merkmale, ohne eine Rangfolge festzulegen.

## Patentansprüche

1. Hydraulische Bremse mit einem Geber (90) und einem Nehmer (1), welche mit einer Hydraulikleitung (95) verbunden sind, wobei die Hydraulikleitung (95) mit einem Hydraulikfluid gefüllt ist, **dadurch gekennzeichnet, dass** der lichte Querschnitt (97) der Hydraulikleitung (95) in zumindest einem Längsabschnitt (951, 952) verringert ist.

2. Hydraulische Bremse nach Anspruch 1, **dadurch gekennzeichnet, dass** der verringerte lichte Querschnitt (97) einen Durchmesser von weniger als 0,5 mm, weniger als 0,3 mm oder weniger als 0,1 mm aufweist.

3. Hydraulische Bremse nach Anspruch 1, **dadurch gekennzeichnet, dass** der Querschnitt (97) der Hydraulikleitung (95) in zumindest einem Längsabschnitt (951, 952) vollständig geschlossen ist.

4. Hydraulische Bremse nach einem der Ansprüche 1 bis 3, **dadurch gekennzeichnet, dass** der Längsabschnitt (951, 952) etwa 1 cm bis etwa 15 cm vom Geber (90) oder vom Nehmer (1) entfernt ist.

5. Hydraulische Bremse nach einem der Ansprüche 1 bis 4, **dadurch gekennzeichnet, dass** der lichte Querschnitt (97) in zwei Längsabschnitten (951, 952) verringert ist, welche etwa 0,5 cm bis etwa 3 cm voneinander entfernt sind.

6. Hydraulische Bremse nach einem der Ansprüche 1 bis 5, **dadurch gekennzeichnet, dass** der Querschnitt (97) in dem zumindest einen Längsabschnitt(951, 952) durch Quetschen und/oder Verschweißen der Hydraulikleitung (95) verringert ist.

7. Verfahren zur Montage einer hydraulischen Bremse mit einem Geber (90) und einem Nehmer (1), welche mit einer Hydraulikleitung (95) verbunden sind, enthaltend die folgenden Schritte:
Verringern (81) des lichten Querschnittes (97) der Hydraulikleitung (95) in zumindest einem Längsabschnitt (951, 952),
Auftrennen (83) der Hydraulikleitung (95),
Montage (84) des Gebers (90) am Fahrzeug,
Montage (85) des Nehmers (1) am Fahrzeug,
Verlegen (86) der Hydraulikleitung (95) am und/oder im Fahrzeug,
Verbinden (87) von Geber (90) und/oder Nehmer (1) mit der Hydraulikleitung (95).

8. Verfahren nach Anspruch 7, **dadurch gekennzeichnet, dass** der Längsabschnitt (951, 952) etwa 1 cm bis etwa 15 cm vom Geber (90) oder vom Nehmer (1) entfernt ist.

9. Verfahren nach einem der Ansprüche 7 oder 8, **dadurch gekennzeichnet, dass** der lichte Querschnitt (97) in zwei Längsabschnitten (951, 952) verringert wird, welche etwa 0,5 cm bis etwa 3 cm voneinander entfernt sind.

10. Verfahren nach einem der Ansprüche 7 bis 9, **dadurch gekennzeichnet, dass** der Querschnitt (97) durch Quetschen und/oder Verschweißen der Hydraulikleitung (95) verringert wird.

11. Verfahren nach einem der Ansprüche 7 bis 10, **dadurch gekennzeichnet, dass** das Verlegen (86) der Hydraulikleitung (95) am Fahrzeug den folgenden Schritt einschließt: Durchführen der Hydraulikleitung (95) durch zumindest eine Öffnung eines Rahmenrohres des Fahrzeugs.

12. Verfahren nach einem der Ansprüche 7 bis 11, **dadurch gekennzeichnet, dass** der verringerte lichte Querschnitt (97) einen Durchmesser von weniger als 0,5 mm, weniger als 0,3 mm oder weniger als 0,1 mm aufweist.

13. Verfahren nach einem der Ansprüche 7 bis 11, **dadurch gekennzeichnet, dass** der Querschnitt (97) der Hydraulikleitung (95) in zumindest einem Längsabschnitt (951, 952) vollständig verschlossen wird.

14. Verfahren zur Herstellung einer hydraulischen Bremse mit einem Geber (90) und einem Nehmer (1), enthaltend die folgenden Schritte:
Verbinden von Geber (90) und Nehmer (1) mit einer Hydraulikleitung (95),
Einfüllen von einem Hydraulikfluid,
Durchführen eines Funktionstestes,
Verringern (81) des lichten Querschnittes (97) der Hydraulikleitung (95) in zumindest einem Längsabschnitt (951, 952).

## Claims

1. Hydraulic brake comprising a transmitter (90) and a receiver (1), both connected to a hydraulic line (95), the hydraulic line (95) being filled with a hydraulic fluid, **characterized in that** the clear cross-section (97) of the hydraulic line (95) is reduced in at least one longitudinal section (951, 952).

2. Hydraulic brake according to claim 1, **characterized in that** the reduced clear cross-section (97) has a diameter of less than 0.5 mm, less than 0.3 mm or less than 0.1 mm.

3. Hydraulic brake according to claim 1, **characterized in that** the cross-section (97) of the hydraulic line (95) is completely closed in at least one longitudinal section (951, 952).

4. Hydraulic brake according to any of claims 1 to 3, **characterized in that** the longitudinal section (951, 952) is about 1 cm to about 15 cm away from the transmitter (90) or the receiver (1).

5. Hydraulic brake according to any of claims 1 to 4, **characterized in that** the clear cross-section (97) is reduced in two longitudinal sections (951, 952) which are about 0.5 cm to about 3 cm away from one another.

6. Hydraulic brake according to any of claims 1 to 5, **characterized in that** the cross-section (97) in the at least one longitudinal section (951, 952) is reduced by squeezing and/or welding the hydraulic line (95).

7. Method for mounting a hydraulic brake comprising a transmitter (90) and a receiver (1), both connected to a hydraulic line (95), containing the following steps:
reducing (81) the clear cross-section (97) of the hydraulic line (95) in at least one longitudinal section (951, 952),
disconnecting (83) the hydraulic line (95),
mounting (84) the transmitter (90) on the vehicle,
mounting (85) the receiver (1) on the vehicle,
laying (86) the hydraulic line (95) on and/or in the vehicle,
connecting (87) the transmitter (90) and/or receiver (1) to the hydraulic line (95).

8. Method according to claim 7, **characterized in that** the longitudinal section (951, 952) is about 1 cm to about 15 cm away from the transmitter (90) or the receiver (1).

9. Method according to any of claims 7 or 8, **characterized in that** the clear cross-section (97) is reduced in two longitudinal sections (951, 952) which are about 0.5 cm to about 3 cm away from one another.

10. Method according to any of claims 7 to 9, **characterized in that** the cross-section (97) is reduced by squeezing and/or welding the hydraulic line (95).

11. Method according to any of claims 7 to 10, **characterized in that** the laying (86) of the hydraulic line (95) on the vehicle includes the following step: passing the hydraulic line (95) through at least one opening of a frame tube of the vehicle.

12. Method according to any of claims 7 to 11, **characterized in that** the reduced clear cross-section (97) has a diameter of less than 0.5 mm, less than 0.3 mm or less than 0.1 mm.

13. Method according to any of claims 7 to 11, **characterized in that** the cross-section (97) of the hydraulic line (95) is completely closed in at least one longitudinal section (951, 952).

14. Method for producing a hydraulic brake comprising a transmitter (90) and a receiver (1), containing the following steps:
connecting transmitter (90) and receiver (1) to a hydraulic line (95),
filling in a hydraulic fluid,
carrying out a function test,
reducing (81) the clear cross-section (97) of the hydraulic line (95) in at least one longitudinal section (951, 952).

## Revendications

1. Frein hydraulique comportant un émetteur (90) et un récepteur (1) qui sont reliés à une conduite hydraulique (95), la conduite hydraulique (95) étant remplie d'un fluide hydraulique,
**caractérisé en ce que**
la section transversale libre (97) de la conduite hydraulique (95) est réduite dans au moins un tronçon longitudinal (951, 952).

2. Frein hydraulique selon la revendication 1,
**caractérisé en ce que**
la section transversale libre réduite (97) présente un diamètre inférieur à 0,5 mm, inférieur à 0,3 mm ou inférieur à 0,1 mm.

3. Frein hydraulique selon la revendication 1,
**caractérisé en ce que**
la section transversale (97) de la conduite hydraulique (95) est complètement fermée dans au moins un tronçon longitudinal (951, 952).

4. Frein hydraulique selon l'une des revendications 1 à 3,
**caractérisé en ce que**
le tronçon longitudinal (951, 952) est distant d'environ 1 cm à environ 15 cm de l'émetteur (90) ou du récepteur (1).

5. Frein hydraulique selon l'une des revendications 1 à 4,
**caractérisé en ce que**
la section transversale libre (97) est réduite dans deux tronçons longitudinaux (951, 952) qui sont distants l'un de l'autre d'environ 0,5 cm à environ 3 cm.

6. Frein hydraulique selon l'une des revendications 1 à 5,
**caractérisé en ce que**
la section transversale (97) dans ledit au moins un tronçon longitudinal (951, 952) est réduite par écrasement et/ou par soudage de la conduite hydraulique (95).

7. Procédé de montage d'un frein hydraulique comportant un émetteur (90) et un récepteur (1) qui sont reliés à une conduite hydraulique (95), comprenant les étapes suivantes consistant à :
réduire (81) la section transversale libre (97) de la conduite hydraulique (95) dans au moins un tronçon longitudinal (951, 952).
couper (83) la conduite hydraulique (95),
monter (84) l'émetteur (90) sur le véhicule,
monter (85) le récepteur (1) sur le véhicule,
poser (86) la conduite hydraulique (95) sur et/ou dans le véhicule,
relier (87) l'émetteur (90) et/ou le récepteur (1) à la conduite hydraulique (95).

8. Procédé selon la revendication 7,
**caractérisé en ce que**
le tronçon longitudinal (951, 952) est distant d'environ 1 cm à environ 15 cm de l'émetteur (90) ou du récepteur (1).

9. Procédé selon l'une des revendications 7 ou 8,
**caractérisé en ce que**
la section transversale libre (97) est réduite dans deux tronçons longitudinaux (951, 952) qui sont distants l'un de l'autre d'environ 0,5 cm à environ 3 cm.

10. Procédé selon l'une des revendications 7 à 9,
**caractérisé en ce que**
la section transversale (97) est réduite par écrasement et/ou par soudage de la conduite hydraulique (95).

11. Procédé selon l'une des revendications 7 à 10,
**caractérisé en ce que**
la pose (86) de la conduite hydraulique (95) sur le véhicule inclut l'étape suivante consistant à faire passer la conduite hydraulique (95) à travers au moins une ouverture d'un tube de châssis du véhicule.

12. Procédé selon l'une des revendications 7 à 11,
**caractérisé en ce que**
la section transversale libre réduite (97) présente un diamètre inférieur à 0,5 mm, inférieur à 0,3 mm ou inférieur à 0,1 mm.

13. Procédé selon l'une des revendications 7 à 11,
**caractérisé en ce que**
la section transversale (97) de la conduite hydraulique (95) est complètement fermée dans au moins un tronçon longitudinal (951, 952).

14. Procédé de réalisation d'un frein hydraulique comportant un émetteur (90) et un récepteur (1), comprenant les étapes suivantes consistant à :
relier (87) l'émetteur (90) et le récepteur (1) à une conduite hydraulique (95),
remplir un fluide hydraulique,
effectuer un test de fonctionnement,
réduire (81) la section transversale libre (97) de la conduite hydraulique (95) dans au moins un tronçon longitudinal (951, 952).
